# EUROPÄISCHE PATENTANMELDUNG

(11) **EP 1 889 697 A2**
(43) Veröffentlichungstag der Anmeldung: **20.02.2008**
(21) Anmeldenummer: 07016129.4
(22) Anmeldetag: 16.08.2007
(51) Int. Cl.: B27B 7/04, B23D 47/02

(54) **Sägemaschineneinheit und Sägemaschine**

(30) Priorität: 16.08.2006 DE 202006012508 U; 11.05.2007 DE 102007022165
(71) Anmelder: Schmidt, Fritz, 94234 Viechtach (DE)
(72) Erfinder: Schmidt, Fritz, 94234 Viechtach (DE)
(74) Vertreter: Herzog, Markus

(57) **Zusammenfassung**

Die vorliegende Erfindung betrifft eine Sägemaschineneinheit (10; 12; 14) für eine entlang einer Vorschubbahn in Vorschubrichtung (V) bewegtes Sägegut in aufeinander folgenden solcher Sägemaschineneinheiten verarbeitende Sägemaschine, wobei die Sägemaschineneinheit (10; 12; 14) umfasst: ein Maschinengestell (16) und wenigstens eine am Maschinengestell (16) in fester räumlicher Zuordnung zu demselben angebrachte Werkzeuganordnung, welche derart ausgebildet ist, dass sie an der Werkzeuganordnung in der Vorschubrichtung (V) vorbei transportiertes Sägegut bearbeitet oder/und das Sägegut in der Vorschubrichtung (V) transportiert. Das Maschinengestell (16) umfasst eine Führungsanordnung, durch welche es an einer in der Vorschubrichtung (V) unmittelbar vorangehend oder/und unmittelbar nachfolgend angeordneten Sägemaschineneinheit (12; 14) längs wenigstens einer quer zur Vorschubrichtung (V) verlaufenden Führungsrichtung beweglich führbar ist.

## Beschreibung

Die vorliegende Erfindung betrifft eine Sägemaschineneinheit für eine entlang einer Vorschubbahn in Vorschubrichtung bewegtes Sägegut in aufeinander folgenden solcher Sägemaschineneinheiten verarbeitende Sägemaschine.

Die Sägemaschineneinheit umfasst ein Maschinengestell und wenigstens eine am Maschinengestell in fester räumlicher Zuordnung zu demselben angebrachte Werkzeuganordnung, welche derart ausgebildet ist, dass sie das an der Wekzeuganordnung in der Vorschubrichtung V vorbei transportierte Sägegut bearbeitet oder/und das Sägegut in der Vorschubrichtung V transportiert bzw. zum Weitertransport zentriert. Feste räumliche Zuordnung soll bedeuten, dass die Werkzeuganordnung relativ zu dem Maschinengestell im Wesentlichen weder an Vorschubrichtung noch in einer Richtung in einer Ebene quer zur Vorschubrichtung beweglich ist.

Gewöhnlich sind bei Sägemaschinen zur Verarbeitung von Holzstämmen die einzelnen Sägemaschineneinheiten, insbesondere Sägeeinheiten, Fräsaggregate, Hobelaggregate und dergleichen aufeinander folgend angeordnet. Gegebenenfalls kann einer jeweiligen der genannten Sägemaschineneinheiten noch eine als Einzugseinheit ausgebildete Sägemaschineneinheit vorgeschaltet sein oder/und eine als Auszugeinheit ausgebildete Sägemaschineneinheit nachgeschaltet sein, welche durch entsprechende Transportoder/und Positionierungsanordnungen (z.B. Rollen bzw. Rolleneinheiten) für eine korrekte Transportführung des Sägeguts sorgen. Die jeweiligen Sägemaschineneinheiten sind damit in fester Zuordnung zu der jeweils vorangehenden bzw. nachfolgenden Sägemaschineneinheit angeordnet. Die Werkzeuganordnung ist bei einer solchen Sägemaschineneinheit an einer geeigneten Position an dem Maschinengestell angebracht, das, ebenso wie auch die der Sägemaschineneinheit vorangehenden bzw. nachfolgenden Sägemaschineneinheiten, fest auf einem Untergrund steht. Gewöhnlich ist die am Maschinengestell gehaltene Werkzeuganordnung, z.B. eine Sägeanordnung, welche eine Sägewelle mit daran angeordneter Sägeblattanordnung umfasst, relativ zu dem Maschinengestell bewegbar, z.B in der Höhe verstellbar (z.B. um unterschiedliche Höhen für die Sägeachse einzustellen). Die genaue Einstellung und Ausrichtung solcher Sägemaschineneinheiten relativ zu den anderen Sägemaschineneinheiten, so dass sich ein geradliniger und möglichst horizontaler Verlauf der Transportbahn für das Sägegut ergibt, erfordert einen gewissen Aufwand, was den Aufbau einer solchen Sägemaschine erschwert. Außerdem treten im Betrieb durch unvermeidliche Erschütterungen einzelner Sägemaschineneinheiten immer wieder Dejustierungen auf, die dann regelmäßig durch neues Ausrichten der Werkzeuganordnung ausgeglichen werden müssen. Es versteht sich, dass es z.B. bei einer Sägeeinheit als der Sägemaschineneinheit, gerade auf eine genaue Ausrichtung der Werkzeuganordnung zur Transportbahn des Sägeguts ankommt, um hinreichend exakte Schnittflächen zu erzielen. Bei einzeln verstellbaren Werkzeugen ergibt sich zudem häufig das Problem, dass aufgrund der im Betrieb unweigerlich auftretenden Verschmutzung deren Justierung stark behindert wird und nur nach gründlicher Reinigung der Lagerung der Werkzeuganordnung eine Verstellung erfolgen kann.

Aus dem Stand der Technik, z.B. der DE 198 35 138 A1 und der DE 43 11 582 C1 sind Sägeanordnungen zum Ablängen von Sägegut, welches entlang einer Vorschubrichtung transportiert wird, bekannt. Bei solchen Anordnungen ist eine Sägeanordnung mit einer Sägeachse parallel zu der Vorschubrichtung des Sägeguts vorgesehen. Die Sägeanordnung ist an einem Maschinengestell in zwei Richtungen quer zur Vorschubrichtung bewegbar gehalten. Das Maschinengestell kann gemäß DE 43 11 582 C1 in Vorschubrichtung mit dem Sägegut mitbewegt werden, um ein Ablängen bei unvermindertem Weitertransport des Sägeguts zu erlauben.

Aufgabe der Erfindung ist es, eine Sägemaschineneinheit für eine Sägemaschine der genannten Art bereitzustellen, die verbesserte Flexibilität im Aufbau und Betrieb bietet. Eine weitere Aufgabe ist es, eine Sägemaschine der genannten Art bereitzustellen, die einfacher installierbar und wartungsfreundlicher ist.

Diese Aufgabe wird erfindungsgemäß dadurch gelöst, dass bei einer Sägemaschineneinheit der eingangs genannten Art das Maschinengestell eine Führungsanordnung aufweist, durch welche es an einer in der Vorschubrichtung unmittelbar vorangehend oder/und unmittelbar nachfolgend angeordneten Sägemaschineneinheit der Sägemaschine längs wenigstens einer quer zur Vorschubrichtung verlaufenden Führungsrichtung beweglich führbar ist.

Wenn das Sägegut in einer im Wesentlichen horizontalen Vorschubrichtung durch die Sägemaschine transportiert wird, kann die Führung quer zur Vorschubrichtung eine Führung in vertikaler Richtung oder eine Führung in einer quer zur Vorschubrichtung (insbesondere orthogonal zur Vorschubrichtung) verlaufenden horizontalen Richtung sein. Bevorzugt ist jedoch je eine Führungsanordnung vorgesehen, die eine Führung in vertikaler Richtung und eine Führung in horizontaler Richtung quer zur Vorschubrichtung gestattet. Ggfs. kommt auch eine einzige Führungsanordnung in Frage, die eine Bewegung in beiden Richtungen gestattet.

Die erfindungsgemäße Führung des Maschinengestells als Ganzes an der vorgeschalteten bzw. nachgeordneten Sägemaschineneinheit bringt entscheidende Vorteile. Da die Sägemaschineneinheit nicht für sich selbst frei auf dem Untergrund stehend aufgebaut ist, sondern mit Bezug zu der vorgeschalteten bzw. nachgeordneten Sägemaschineneinheit montiert wird und nur längs vorbestimmter Führungsbahnen relativ zu derselben bzw. denselben verlagerbar ist, lässt sich bereits beim Aufbau der Sägemaschine mit wenig Aufwand eine genaue Ausrichtung der Sägemaschineneinheit relativ zu der/den ihr unmittelbar vorangehenden/nachfolgenden Sägemaschineneinheit(en) erreichen. Beim Aufbau der Sägemaschine kann so ein deutlicher Zeitvorteil erzielt werden. Da die Sägemaschineneinheit insgesamt, d.h. deren Maschinengestell inklusive der darin angebrachten Werkzeuganordnung(en) gegebenenfalls mit Antriebsmotor(en), als Einheit bewegt werden kann, lässt sich die Justierung zudem mit wenigen Arbeitsschritten erledigen, wobei die Werkzeuganordnung am Maschinengestell fest vormontiert sein kann. Dabei erlaubt die Führung an der vorangehenden oder/und nachfolgenden Sägemaschineneinheit gleichzeitig selbst bei großem Gewicht der Sägemaschineneinheit genaue Verstellmöglichkeiten, weil die Verstellrichtungen durch die Führungsbahnen vorgegeben sind.

Die Sägemaschineneinheit lässt sich kompakt aufbauen, da innerhalb des verstellbaren Rahmens die komplette Werkzeuganordnung bzw. gegebenenfalls mehrere Werkzeuganordnungen fest angebracht werden können. Dies schafft gleichzeitig mehr Freiraum, der dazu genutzt werden kann, Antriebsmotoren für die Werkzeuganordnung(en) in variabler Weise je nach den günstigsten Gegebenheiten anzuordnen.

Die in der Vorschubrichtung unmittelbar vorangehend oder/und unmittelbar nachfolgend angeordnete Sägemaschineneinheit kann z.B. eine Führungseinheit für das Sägegut, d.h. eine Einzugseinheit bzw. Auszugseinheit für die Sägemaschineneinheit sein oder auch eine einer vorangehend angeordneten Sägemaschineneinheit nachgeordnete Auszugseinheit sein. Sie kann u. U. auch eine das Sägegut vorbehandelnde oder weiterverarbeitende Sägemaschineneinheit, z.B. eine vorgeschaltete bzw. nachgeschaltete Fräseinheit, Hobeleinheit, Seitenware-Abtrenneinheit oder Sägeeinheit, sein.

Es ist nicht unbedingt erforderlich, das Maschinengestell sowohl an der in Vorschubrichtung vorderen Seite als auch an der in Vorschubrichtung hinteren Seite an einer unmittelbar benachbarten Sägemaschineneinheit zu führen. Vielmehr kann es in manchen Fällen durchaus ausreichend sein, wenn das Maschinengestell nur auf einer Seite geführt ist, und die anderen Seite völlig ohne Führung, gewissermaßen frei schwebend, ausgebildet ist. Das Sägegut wird dann über eine gewisse freie Strecke der Sägemaschineneinheit zugeführt, bzw. über eine gewisse freie Strecke von der Sägemaschineneinheit zu einer nachfolgenden Sägemaschineneinheit befördert.

Die Werkzeuganordnung kann nur ein an einer entlang einer Werkzeugdrehachse verlaufenden Werkzeugwelle angebrachtes Werkzeug, z.B. Sägeblatt, oder mehrere Werkzeuge, z.B. Sägeblätter, umfassen, die an der Werkzeugwelle als Werkzeuganordnung gemeinsam um die Werkzeugachse drehbar mit Abstand in axialer Richtung zueinander angebracht sind. Die Werkzeugwelle kann beidseitig einer Vorschubbahn des Sägegutes oder nur auf einer Seite gelagert sein.

Die Sägemaschineneinheit bzw. das Maschinengestell kann an einem auf einem Untergrund ruhenden Rahmengestell einer Sägemaschine aufgehängt sein. Auf ein separates Rahmengestell kann sogar verzichtet werden, wenn die Sägemaschineneinheit bzw. das Maschinengestell an der in der Vorschubrichtung unmittelbar vorangehend oder/und unmittelbar nachfolgend angeordneten Sägemaschineneinheit aufgehängt ist. In beiden Fällen steht das Maschinengestell nicht selbst auf dem Untergrund, sondern ist mit diesem nur über das Rahmengestell oder den Rahmen bzw. die Füße der entsprechenden unmittelbar vorangehend oder/und unmittelbar nachfolgend angeordneten Sägemaschineneinheit(en) verbunden. Bei einer derart hängenden Sägemaschineneinheit spielt es kaum noch eine Rolle, ob der Untergrund unter der Sägemaschineneinheit an sich eben oder uneben ist. Möglicherweise vorhandene Unebenheiten des Untergrunds wirken sich für die Anordnung der Sägemaschineneinheit relativ zu der ihr unmittelbar vorangehend oder/und unmittelbar nachfolgend angeordneten Sägemaschineneinheit vielmehr überhaupt nicht aus, denn durch die zwischen ihnen ausgebildete Führung ist bereits deren relative Lage zueinander in einer, zwei oder ggfs. noch mehr Führungsrichtungen festlegbar.

Die Sägemaschineneinheit kann zum einen in der Art eines herausragenden Stegs an der unmittelbar vorangehend oder/und unmittelbar nachfolgend angeordneten Sägemaschineneinheit frei hängen oder in der Art einer Brücke zwischen der unmittelbar vorangehend oder/und unmittelbar nachfolgend angeordnetenSägemaschineneinheit angeordnet sein. Durch eine geeignete Ausbildung der Führung lässt sich problemlos erreichen, dass diese das Gewicht der kompletten Sägemaschineneinheit tragen kann und darüberhinaus auch leichtgängig verstellt werden kann.

Um eine sichere und einfach zu bedienende Führung zu gewährleisten, kann das Maschinengestell an seiner in Vorschubrichtung vorderen oder/ und hinteren Seite eine mit der unmittelbar vorangehend oder/und unmittelbar nachfolgend angeordneten Sägemaschineneinheit zusammenwirkende Linearführungsanordnung aufweisen. Am Maschinengestell ist dann z.B. ein Schienensystem angebracht, das mit einer entsprechenden Schlittenanordnung, die an der unmittelbar vorangehenden oder/und unmittelbar nachfolgenden Sägemaschineneinheit angebracht ist, zusammenwirkt, oder es ist umgekehrt eine Schlittenanordnung am Maschinengestell der Sägemaschineneinheit vorgesehen, die mit einem entsprechenden Schienensystem, das an der unmittelbar vorangehenden oder/und unmittelbar nachfolgenden Sägemaschineneinheit angebracht ist, zusammenwirkt. Das Linearführungssystem kann im einfachsten Fall eine Gleitführung sein. Gerade wenn der Maschinenrahmen, beispielsweise im Falle einer Sägeeinheit mit der bzw. den daran angebrachten Sägeanordnung(en), sehr schwer ist, wird es sich jedoch empfehlen, entsprechend aufwändigere Linerführungssysteme einzusetzen, bei denen der Schlitten durch Wälzkörper gelagert ist.

Es ist darüber hinaus günstig, wenn die Führung es erlaubt, das Maschinengestell relativ zu der unmittelbar vorangehend oder/und unmittelbar nachfolgend angeordneten Sägemaschineneinheit gegenüber einer Bewegung längs der Führungsrichtung, d.h. insbesondere quer zur Vorschubrichtung, zumindest zeitweilig zu arretieren. So können bestimmte bevorzugte Betriebsstellungen schnell und immer gleich angefahren werden.

Es ist günstig, wenn die Führungsanordnung im Wesentlichen in einem oberen Bereich des Maschinengestells, insbesondere im Wesentlichen oberhalb der Werkzeuganordnung oder auf gleicher Höhe wie diese angeordnet ist, weil dann die Gefahr der Verschmutzung der Führungsanordnung, z.B. durch im Betrieb herab fallende Hackschnitzel und dgl., verringert ist. Dies gilt in besonderem Maße für horizontal verlaufende Führungsanordnungen, welche ohne weiteres in einen Bereich verlegt werden können, der oberhalb und außerhalb der Werkzeuganordnung liegt. Jedoch ist es auch bei anderem Verlauf der Führungsrichtung erstrebenswert, einen möglichst großen Teil der Führungsanordnung oberhalb der Werkzeuganordnung anzuordnen.

Ein der wenigstens einen Werkzeuganordnung zugeordneter Antriebsmotor kann günstig auf der Oberseite des Maschinengestells angebracht sein.

Eine automatische Verstellmöglichkeit lässt sich in einfacher Weise durch Vorsehen einer mit dem Maschinengestell zum Verstellen des Maschinengestells quer zur Vorschubrichtung des Sägeguts zusammenwirkenden Stellvorrichtung realisieren. Die Stellvorrichtung wird hierbei günstig als Linearantriebsvorrichtung ausgebildet sein und kann hydraulisch, pneumatisch oder mechanisch betätigbar sein. Beispiele für solche Linearantriebsvorrichtung sind hydraulisch oder pneumatisch betätigbare Zylinder-/Kolbeneinheiten oder Spindel-/Schlittenantriebe.

Die Stellvorrichtung kann in einfacher Weise zwischen dem Maschinengestell und einem Untergrund, auf dem die Sägemaschine steht, angeordnet sein und so zum Heben bzw. Absenken des Maschinengestells dienen, aber auch eine Verlagerung des Maschinengestells parallel zum Untergrund erzeugen. Die Stellvorrichtung wird in diesem Fall an der Unterseite des Maschinengestells angreifen. Je nach Gegebenheit kann auch vorgesehen sein, dass die Stellungvorrichtung einen Teil oder das gesamte Gewicht der Sägemaschineneinheit trägt. Bevorzugt wird man dies jedoch allenfalls kurzzeitig, nämlich während der Verstellphasen, zulassen und ansonsten das Maschinengestell an der vorangehenden oder/und nachfolgenden Sägemaschineneinheit aufhängen, die dann das Gewicht der Sägemaschineneinheit trägt.

Weitere Möglichkeiten der Anordnung der Stellvorrichtung ergeben sich, wenn ein zusätzlicher Rahmen vorhanden ist, der fest an einem Untergrund fixiert ist, auf dem die Sägeeinheit oder/und die Sägemaschine steht. Dann kann die Stellvorrichtung auch zwischen dem Maschinengestell und dem Rahmen angeordnet sein und beispielsweise auf der der Oberseite des Maschinengestells oder aber auch seitlich am Maschinengestell angreifen. Es versteht sich, dass auch eine Kombination dieser Möglichkeiten denkbar ist. Eine solche bietet sich bei einer Sägeeinheit als Beispiel der Sägemaschineneinheit insbesondere dann an, wenn eine Verstellbarkeit des Maschinengestells sowohl in Richtung der Sägeachse(n) als auch orthogonal zu der/den Sägeachse(n) gewünscht ist.

Die Führung des Maschinengestells an einer der Sägemaschineneinheit vorangehend oder/und nachfolgend angeordneten Sägemaschineneinheit erlaubt darüber hinaus eine Dämpfung von Schwingungen, die durch in anderen Sägemaschineneinheiten erzeugte Erschütterungen hervorgerufen werden. Insbesondere kann der Einfluss solcher Schwingungen, die durch die unmittelbar mit der Sägemaschineneinheit gekoppelten Sägemaschineneinheiten, z.B. Einzugs- oder Auszugsvorrichtungen, erzeugt werden, auf die Sägemaschineneinheit unterdrückt werden. Hierzu es bevorzugt vorgesehen, dass das Maschinengestell in Reaktion auf Bewegungen, insbesondere Vibrationen, der in Vorschubrichtung vorangehend oder/und nachfolgend angeordneten Sägemaschineneinheit Verlagerungsbewegungen ausführt, die diese Erschütterungen bzw. Vibrationen ausgleichen. Denkbar ist zum einen eine rein passiv arbeitende geeignete Lagerung des Maschinengestells mittels Schwingungdämpfungseinrichtungen, die zwischen der vorangehenden oder/und nachfolgenden Sägemaschineneinheit und dem Maschinengestell oder auch zwischen dem Maschinengestell und einem festen Rahmen oder Untergrund angeordnet sein können. Etwas aufwändiger, jedoch hinsichtlich der erzielbaren Resultate effektiver kann bei Vorhandensein einer Stellvorrichtung aber auch eine aktive Ansteuerung dieser Stellvorrichtung vorgesehen sein. Die Stellvorrichtung bewirkt dann entsprechende Verstellbewegungen des Maschinengestells, um die Schwingungen der anderen Sägemaschineneinheiten auszugleichen. Es versteht sich, das es hierzu umso günstiger ist, wenn das Maschinengestell nicht nur in einer Richtung, sondern bevorzugt in mindestens zwei zueinander (idealerweise orthogonal) abgewinkelten Richtungen verschiebbar geführt ist.

Die Sägemaschineneinheit kann beispielsweise als Sägeeinheit ausgebildet sein, wobei eine Sägeanordnung mit wenigstens einem Sägeblatt um eine zugeordnete relativ zu dem Maschinengestell - wenigstens im laufenden Betrieb - sowohl in Vorschubrichtung als auch in Richtung einer Ebene quer zur Vorschubrichtung feste Sägeachse drehbar ist und von einer Seite des Sägeguts her in dieses Sägegut eingreift.

Die Sägeachse der Sägeeinheit verläuft vorzugsweise quer zur Vorschubrichtung. Das Sägeblatt bzw. die Sägeblattanordnung erzeugt dann im Sägegut, relativ zur Vorschubrichtung gesehen, Schnittflächen in Längsrichtung des Sägeguts, und zwar vorzugsweise entweder als horizontale Schnittfläche bei vertikal angeordneter Sägeachse oder als vertikale Schnittfläche bei horizontal angeordneter Sägeachse.

Vorzugsweise ist das Maschinengestell an der unmittelbar vorangehenden oder/und unmittelbar nachfolgenden Sägemaschineneinheit in einer Richtung im Wesentlichen orthogonal zur Sägeachse verschiebbar geführt. Eine solche Verlagerung des Maschinengestells ermöglicht bei ein und derselben Sägeanordnung das Einschneiden des Sägeblatts in das Sägegut von zwei gegenüberliegenden Seiten des Sägeguts her. Dadurch kann dieselbe Sägeanordnung sowohl im Gleichlauf, d.h. bei gleichsinniger Drehung des Sägeblatts mit der Vorschubrichtung des Sägeguts, als auch im Gegenlauf, d.h. bei gegensinniger Drehung des Sägeblatts zur der Vorschubrichtung des Sägeguts, arbeiten. Beispielsweise ist bei horizontal verlaufender Sägeachse das Maschinengestell in vertikaler Richtung verlagerbar, was es ermöglicht, einen Einschnitt in das Sägegut zum einen von unten und zum anderen nach Verstellen des Maschinengestells nach oben von oben anzubringen. Die vertikale Verstellhöhe kann bis zu mehrere Meter betragen, sodass beispielsweise zwischen einer Höhe der Sägeachse zwischen 18 und 100 mm von unten im Gegenlauf gesägt werden kann und ab einer Höhe der Sägeachse von 100 mm von oben im Gleichlauf gesägt werden kann. Auch hierbei erlaubt es die erfindungsgemäß vorgesehene Führung des Maschinengestells, dieses schnell und flexibel zwischen verschiedenen Stellungen zu verfahren, ohne jeweils von Neuem eine Feineinstellung vornehmen zu müssen.

Das Maschinengestell kann aber alternativ oder zusätzlich zu der genannten Verstellmöglichkeit orthogonal zur Sägeachse an der unmittelbar vorangehenden oder/und unmittelbar nachfolgenden Sägemaschineneinheit im Wesentlichen in Richtung der Sägeachse verschiebbar geführt sein. Sofern die Sägeachse horizontal verläuft, bedeutet dies eine Verstellmöglichkeit des Maschinengestells in Querrichtung zur Vorschubrichtung. Dann lassen sich Einschnitte in das Sägegut bei vertikal angeordneten Sägeblättern an verschiedenen Breitenpositionen bzw. bei horizontal angeordneten Sägeblättern in verschiedener Höhe anbringen.

Eine besonders günstige und flexible Einsatzmöglichkeit der Sägeeinheit lässt sich erzielen, wenn auf der Sägeachse wenigstens zwei Sägeblattanordnungen angebracht sind, die in axialer Richtung der Sägeachse einen solchen Abstand zueinander aufweisen, dass durch Verlagern des Maschinenengestells in Richtung der Sägeachse abwechselnd eine der Sägeblattanordnungen in eine Sägestellung bringbar ist, in der ihre Sägeblätter in das Sägegut eingreifen können. Unter Sägestellung ist hierbei eine Verlagerung der entsprechenden Sägeblattanordnung bis in den Bereich der Vorschubbahn des Sägeguts zu verstehen. Wenn die Sägeachse quer zur Vorschubrichtung verläuft, ist ein Verstellen in Richtung der Sägeachse gleichbedeutend mit einem Verstellen in Querrichtung zur Vorschubrichtung. Die Führung des Maschinengestells erlaubt es, die Sägeblattanordnungen innerhalb kürzester Zeit abwechselnd in Sägestellung zu bringen. Größere Feineinstellungen sind hierbei in der Regel überflüssig. Zusätzlich ist es hilfreich, wenn die Führung über entsprechende Arretiereneinrichtungen verfügt, die dafür sorgen, dass die Führung bei Erreichen der Sägestellung einer der Sägeblattanordnungen wenigstens kurzzeitig arretiert oder verrastet.

Jede Sägeblattanordnung umfasst bei dieser bevorzugten Variante wenigstens ein Sägeblatt, das z.B. eine jeweils unterschiedlicher Stärke, Radius oder oder/und Zahnung besitzt, so dass die Sägeeinheit flexibel für unterschiedliches Sägegut angepasst werden kann.

Vorzugsweise umfasst jede Sägeblattanordnung wenigstens zwei Sägeblätter mit unterschiedlichem Abstand zueinander. Dies ermöglicht das Einbringen unterschiedlicher Schnittmuster in das Sägegut bei Einsatz ein und derselben Sägeeinheit bzw. Sägeanordnung, nämlich lediglich durch Verschieben des Maschinengestells. Beispielsweise können die Sägeblattanordnungen Sägeblätter mit unterschiedlichem Abstand zueinander aufweisen, so dass unterschiedliche Brettstärken durch einfaches Hin- und Herschieben des Maschinengestells gesägt werden können.

Die Sägeanordnung kann im einfachsten Fall als einwellige Säge nur eine einzige im Wesentlichen orthogonal zur Vorschubrichtung verlaufende Sägeachse aufweisen. Auch dann erhält man wegen der vielfältigen Verstellmöglichkeiten des Maschinengestells bereits eine flexibel einsetzbare Sägeeinheit, die sowohl im Gleichlauf als auch im Gegenlauf arbeiten kann und darüber hinaus eine Vielzahl von Schnittmustern erzeugen kann, ohne dass bauliche Änderungen erforderlich werden.

Die Sägeanordnung kann als doppelwellige Säge auch zwei, in der Regel im Wesentlichen orthogonal zur Vorschubrichtung verlaufende, Sägeachsen umfassen, wobei die zweite Sägeachse eine Gegen-Sägeachse ist, der ein zweites Sägeblatt zugeordnet ist, das von von einer der einen Seite gegenüberliegenden Seite des Sägeguts her in dieses Sägegut eingreift. Das der einen Sägeachse zugeordnete Sägeblatt und das der zugeordneten Gegen-Sägeachse zugeordnete Sägeblatt können, bezogen auf die Vorschubrichtung des Sägegutes, an im Wesentlichen der gleichen Querposition angeordnet sein. Will man unterschiedlich große Sägeblätter verwenden, so kann beispielsweise daran gedacht werden, jeweils entsprechend vorgesehene Montagepositionen für wenigstens eine der Sägewellen vorzusehen, wobei jede Montageposition derart gewählt ist, dass ein auf die Größe des jeweiligen Sägeblattes abgestimmter Abstand zwischen den Sägewellen eingehalten ist. Alternativ kann auch für jede Sägewelle ein eigenes Maschinengestell vorgesehen sein, so dass der Abstand zwischen den Sägewellen durch Verlagern der Maschinengestelle entlang ihrer jeweiligen Führungsanordnungen eingestellt werden kann.

Die Flexibilität der Anordnung des Maschinengestells erlaubt es, das wenigstens eine Sägeblatt längs seiner zugeordneten Sägeachse feststehend anzubringen, ohne dass ein wesentlicher Teil der Flexibilität verloren geht.

Am Maschinengestell kann ein der wenigstens einen Sägeachse zugeordneter Antriebsmotor angebracht sein. Sofern mehrere Sägeachsen vorhanden sind, kann ggfs. jeder Sägeachse ein eigener Antriebsmotor zugeordnet und dementsprechend am Maschinengestell angebracht sein. Da das Maschinengestell nicht frei verlagert wird, sondern nur längs vorbestimmter Führungsrichtungen, beeinträchtigt das immer mehr zunehmende Gewicht eine ausreichend präzise Verstellung des Maschinengestells nicht allzu stark. Beispielsweise kann der Antriebsmotor auf der Oberseite des Maschinengestells angebracht sein. Bei einer Doppelwellen-Säge kann der Antriebsmotor auch die Sägewellen von zwei Sägeanordnungen antreiben, von denen jede eine Wesentlichen orthogonal zur Vorschubrichtung verlaufende Sägeachse aufweist. Er kann hierfür über ein geeignetes Getriebe, z.B. ein Riemengetriebe mit den jeweiligen Sägewellen gekoppelt sein.

Im Falle einer als Sägeeinheit ausgebildeten Sägemaschineneinheit kann die Sägemaschineneinheit als Vertikalsägeeinheit ausgebildet sein, wobei die Sägeanordnung derart ist, dass die Sägeachse horizontal verläuft. Alternativ kann die Sägemaschineneinheit auch als Horizontal-Sägemaschineneinheit ausgebildet sein, wobei die Sägeanordnung derart ausgebildet ist, dass die Sägeachse vertikal verläuft. Darüber hinaus kann die Sägemaschineneinheit als horizontales oder vertikales Fräsaggregat ausgebildet sein, welches eine Werkzeuganordnung aufweist, die wenigstens einen Fräskopf, vorzugsweise einen Fräskopf oder zwei Fräsköpfe im Abstand voneinander, umfasst. Eine weitere Möglichkeit besteht darin, die Sägemaschineneinheit als Seitenware-Abtrennaggregat auszubilden. Schließlich ist es ebenso möglich, die Sägemaschineneinheit als Hobelaggregat mit wenigstens einer Hobelwelle auszubilden. Gleichfalls ist es denkbar, die Sägemaschineneinheit als Seitenbearbeitungseinheit, d.h. zur Bearbeitung der Seitenflächen des Sägeguts vor oder nach dem eigentlichen Sägeprozess, auszubilden.

Die Erfindung bezieht sich neben der beschriebenen Sägemaschineneinheit auch auf eine Sägemaschine, in welche wenigstens eine Sägemaschineneinheit der beschriebenen Art eingebaut ist. Bei einer solchen Sägemaschine kann die unmittelbar nachfolgend angeordnete Sägemaschineneinheit eine in Vorschubrichtung der Sägemaschineneinheit nachgeordnete Auszugsvorrichtung für das die Sägemaschineneinheit verlassende Sägegut sein. Die Auszugsvorrichtung weist dann eine mit der Führungsanordnung am Maschinengestell zusammenwirkende Führungsanordnung auf. Alternativ oder zusätzlich kann bei einer Sägemaschine mit wenigstens einer Sägemaschineneinheit der beschrieben Art die vorangehend angeordnete Sägemaschineneinheit eine in Vorschubrichtung vor der Sägemaschineneinheit angeordnete Einzugsvorrichtung für das Sägegut sein, welche eine mit der Führungsanordnung am Maschinengestell der Sägemaschineneinheit zusammenwirkende Führungsanordnung aufweist. Anstatt einer Einzugseinheit für die Sägemaschineneinheit kann aber auch als die vorangehend angeordnete Sägemaschineneinheit eine Auszugsvorrichtung einer vorgeschalteten weiteren Sägemaschineneinheit vorgesehen sein.

Die derart aufgebaute Sägemaschine besitzt eine modulare Struktur, die aus einzelnen Sägemaschineneinheiten besteht, welche für sich selbstständig arbeiten. Jede der Sägemaschineneinheiten kann in einfacher Weise vormontiert werden, da es in der Regel nicht erforderlich ist, einzelne Bauteile der jeweiligen Sägemaschineneinheit beweglich gegenüber dem jeweiligen Maschinengestell zu lagern. Vielmehr kann die einzelne Sägemaschineneinheit - von der immer erforderlichen Drehbeweglichkeit beispielweise eines Sägeblatts gegenüber dem Maschinengestell einmal abgesehen - als eine im Wesentlichen in sich starre Konstruktion aufgebaut werden. Die auf solche Art modular aufgebaute Sägemaschine lässt sich dennoch auf äußerst einfache Weise verschiedensten Gegebenheiten anpassen, indem je nach gewünschter Funktionalität unterschiedliche der Sägemaschineneinheiten zusammengestellt werden, die an der ihnen jeweils vorgeschalteten bzw. nachgeschalteten Sägemaschineneinheit geführt sind. Bevorzugt sind diese Sägemaschineneinheiten nicht direkt auf dem Untergrund gelagert, sondern sind vielmehr in einer frei schwebenden bzw. hängenden Art und Weise an der ihnen jeweils zugeordneten vorgeschalteten oder/und nachgeschalteten Sägemaschineneinheit oder einem festen Rahmengestell der Sägemaschine gelagert. Der Kontakt mit einem Untergrund geschieht hierbei entweder über das auf festen Fundamenten ruhende Rahmengestell der Sägemaschine oder vorzugsweise über den einzelnen Sägemaschineneinheiten, welche eine Bearbeitung des Sägeguts vornehmen, jeweils vorgeschaltete oder/und nachgeschaltete Einzugseinheiten oder/und Auszugseinheiten. Dies ermöglicht eine äußerst flexible Anpassung an möglicherweise unebenen Untergrund beim Aufbau einer Sägemaschine, und zwar unabhängig davon, welche einzelnen Sägemaschineneinheiten für die Sägemaschine tatsächlich benötigt werden, und ermöglicht darüber hinaus eine einfache Nachjustierung und Wartung der einzelnen Sägemaschineneinheiten bzw. der Sägemaschineneinheiten zueinander während des laufenden Betriebs der Sägemaschine.

Die Erfindung wird im Folgenden anhand von Ausführungsbeispielen unter Bezugnahme auf die begleitenden Figuren näher erläutert. Es zeigen:
- Fig. 1A und 1B:: zwei Ansichten einer als Sägeeinheit ausgebildeten Form einer erfindungsgemäßen Sägemaschineneinheit, die an einer nachfolgenden Auszugseinheit beweglich geführt ist, und zwar in jeweils vertikal unterschiedlichen Stellungen der Sägeanordnung,
- Fig. 2A und 2B:: Seitenansichten entsprechend Fig. 1A und 1 B einer weiteren als Sägeeinheit ausgebildeten Ausführungsform einer erfindungsgemäßen Sägemaschineneinheit, die sowohl an einer vorangehenden Auszugsvorrichtung als auch an einer nachfolgenden Auszugsvorrichtung beweglich geführt ist,
- Fig. 3A und 3B:: Ansichten einer dritten als Sägeeinheit ausgebildeten Ausführungsform einer erfindungsgemäßen Sägemaschineneinheit entsprechend Fig. 1A und 1 B, welche eine doppelwellige Säge mit zwei Sägeanordnungen aufweist,
- Fig. 4A und 4B:: zwei Draufsichten auf eine vierte als Sägeeinheit ausgebildete Ausführungsform einer erfindungsgemäßen Sägeeinheit, welche an einer vorangehenden Einzugsvorrichtung und einer nachfolgenden Auszugsvorrichtung horizontal beweglich geführt ist, jeweils in zwei verschiedenen Stellungen der Sägeanordnung,
- Fig. 5A und 5B:: zwei Draufsichten auf eine weitere als Sägeeinheit ausgebildete Ausführungsform einer erfindungsgemäßen Sägemaschineneinheit, welche lediglich an einer nachfolgenden Auszugsvorrichtung horizontal beweglich geführt ist, ebenfalls in zwei verschiedenen Stellungen der Sägeanordnung,
- Fig. 6A und 6B:: zwei Seitenansichten der Ausführungsform gemäß Fig.3A und 3B in einer modifizierten Form mit auf der Oberseite des Maschinengestells angeordnetem Antriebsmotor für die Sägeanordnung,
- Fig. 7:: eine Draufsicht auf eine modular aufgebaute Sägemaschine, welche eine Mehrzahl von verschiedenen Ausführungsformen von erfindungsgemäßen Sägemaschineneinheiten mit jeweils unterschiedlichen Werkzeuganordnungen umfasst,
- Fig. 8:: eine Draufsicht auf eine weitere modular aufgebaute Sägemaschine gemäß der Erfindung, und
- Fig. 9A bis 9C:: Ausrichten von Sägegut nach Passieren aufeinander folgender der in Fig. 8 gezeigten Sägemaschineneinheiten.

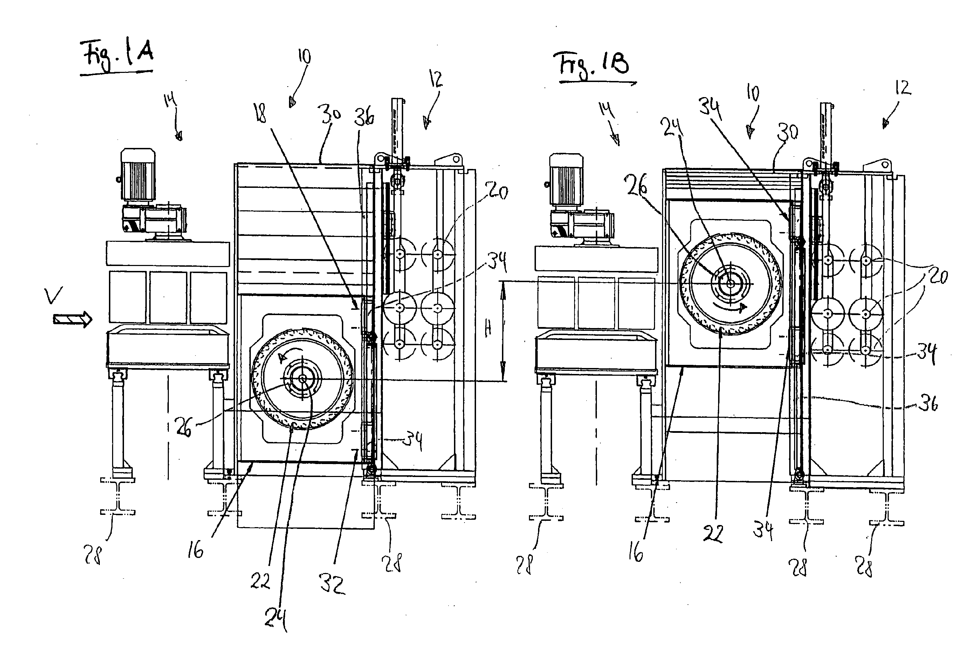

In Fig. 1 ist eine erste Ausführungsform einer erfindungsgemäßen Sägemaschineneinheit in Seitenansicht gezeigt, und zwar in Fig. 1A mit in Vertikalrichtung in einer untersten Stellung befindlichem Maschinenrahmen 16 und in Fig. 1B mit vertikal nach oben verstelltem Maschinenrahmen 16. Der Sägeeinheit 10 unmittelbar nachfolgend ist eine Auszugsvorrichtung 12 angeordnet, welche in der Sägeeinheit 10 getrenntes Sägegut aus der Sägeeinheit 10 heraus befördert und zur weiteren Verarbeitung zu nachfolgenden, in Fig. 1 nicht gezeigten Sägemaschineneinheiten transportiert. In Fig. 1 sind die für den Transport des Sägeguts eingesetzten Transportrollen 20 mit horizontaler Drehachse der Auszugsvorrichtung 12 lediglich schematisch eingezeichnet.

Das in Fig. 1A und 1 B nicht eingezeichnete Sägegut wird in Vorschubrichtung V durch die Sägemaschine transportiert und der Sägeeinheit 10 von einer dieser vorangehend angeordneten Einzugsvorrichtung 14 mit Rollen mit vertikaler Drehachse (die in Fig. 1A und 1 B ebenfalls lediglich schematisch angedeutet sind) zugeführt. Aus der Einzugsvorrichtung 14 kommend, bewegt sich das Sägegut in Vorschubrichtung V längs seiner Vorschubbahn weiter und gelangt schließlich in einen Bereich, in dem ein in Fig. 1A unterhalb des Sägeguts angeordnetes Kreissägeblatt 22 der Sägeeinheit 10 Einschnitte im Sägegut anbringen kann. Das Kreissägeblatt 22 der in Fig. 1A und 1 B gezeigten Sägeanordnung ist an einer quer (und zwar orthogonal) zur Vorschubrichtung V und im Wesentlichen in horizontaler Richtung verlaufenden Sägewelle 26 angebracht und bildet somit im Sägegut parallel zur Vorschubrichtung V verlaufende Einschnitte. Die zentral die Sägewelle 26 durchsetzende Gerade definiert eine Sägeachse 24, um die sich das Kreissägeblatt 22 in Fig. 1A und 1 B im Gegenuhrzeigersinn dreht (siehe den entsprechenden Pfeil).

In der Fig. 1A gezeigten Stellung mit unterhalb der Transportbahn angeordneter Sägeachse 24 gelangt das durch einen nicht gezeigten Antriebsmotor im Gegenuhrzeigersinn angetriebene Kreissägeblatt 22 mit seiner Oberseite in Eingriff mit dem zu sägenden Sägegut und sägt dieses daher in einer Gegenlaufanordnung, in der die Bewegungsrichtung des in das Sägegut eingreifenden Abschnitts des Kreissägeblatts gegensinnig zu der Vorschubrichtung V des Sägeguts ist.

Demgegenüber greift in der in Fig. 1 B gezeigten Stellung des Maschinengestells 16 mit oberhalb der Vorschubbahn V des Sägeguts liegender Sägeachse 24 das Kreissägeblatt 22 mit seiner unteren Seite in das Sägegut ein und arbeitet daher bei Antrieb des Sägeblatts 22 im Gegenuhrzeigersinn in einer Gleichlaufanordnung mit dem Sägegut, bei der die Bewegungsrichtung des in das Sägegut eingreifenden Abschnitts des Sägeblatts 22 gleichsinnig zur Vorschubrichtung V ist. Damit kann je nach vertikaler Anordnung der Sägeachse 24 die selbe aus Sägewelle und daran befestigtem Sägeblatt bzw. Sägeblattanordnung gebildete Sägeanordnung sowohl zum Zerteilen von Sägegut im Gleichlauf als auch im Gegenlauf eingesetzt werden.

Sowohl die Auszugsvorrichtung 12 als auch die Einzugsvorrichtung 14 stehen auf im Querschnitt Doppel-T-förmigen Fußteilen 28, die auf einem in Fig. 1A und 1 B nicht gezeigten Untergrund aufliegen. Im Bereich der Sägeeinheit 10 befindet sich ein Rahmen 30 der Sägemaschine, der ebenfalls auf solchen Fußteilen 28 aufliegt. Das Maschinengestell 16 ist allerdings nicht an dem Rahmen 30 selbst gehalten, sondern über eine Linearführungsanordnung 32 an der der Sägeeinheit 10 nachfolgenden Auszugsvorrichtung 12 aufgehängt. Die Linearführungsanordnung 32 umfasst zwei am Maschinengestell 16 mit Abstand zueinander angebrachte Schlitten 34, die in Vertikalrichtung verschiebbar an einer Schiene 36 gelagert sind, welche an einem Rahmen der Auszugsvorrichtung 12 vorgesehen ist. Die Schlitten 34 können darüber hinaus durch eine Arretiervorrichtung in einer gewünschten Vertikalstellung an der Linearführungsschiene 36 arretiert werden (in Fig. 1A und 1 B ist diese Arretiervorrichtung nicht im Detail gezeigt).

Im Gegensatz zu der Führung des Maschinengestells 16 am Rahmen der Auszugsvorrichtung 14 ist das Maschinengestell 16 der Sägeeinheit 10 gegenüber der Einzugsvorrichtung 14 frei angeordnet. Es ist damit nur an seiner unmittelbar nachfolgenden Sägemaschineneinheit, nämlich der Auszugsvorrichtung 12 gehalten und geführt und steht mit seiner in Vorschubrichtung V gesehen vorderen Seite frei vor. Die Einzugsvorrichtung 14 und die aus Sägeeinheit 10 und Auszugsvorrichtung 12 bestehende Einheit sind damit voneinander entkoppelt.

In Fig. 1 ist außerdem noch der Höhenversatz H zwischen den in Fig. 1A und 1 B gezeigten Stellungen der Sägeachse 24 durch einen Doppelpfeil gekennzeichnet.

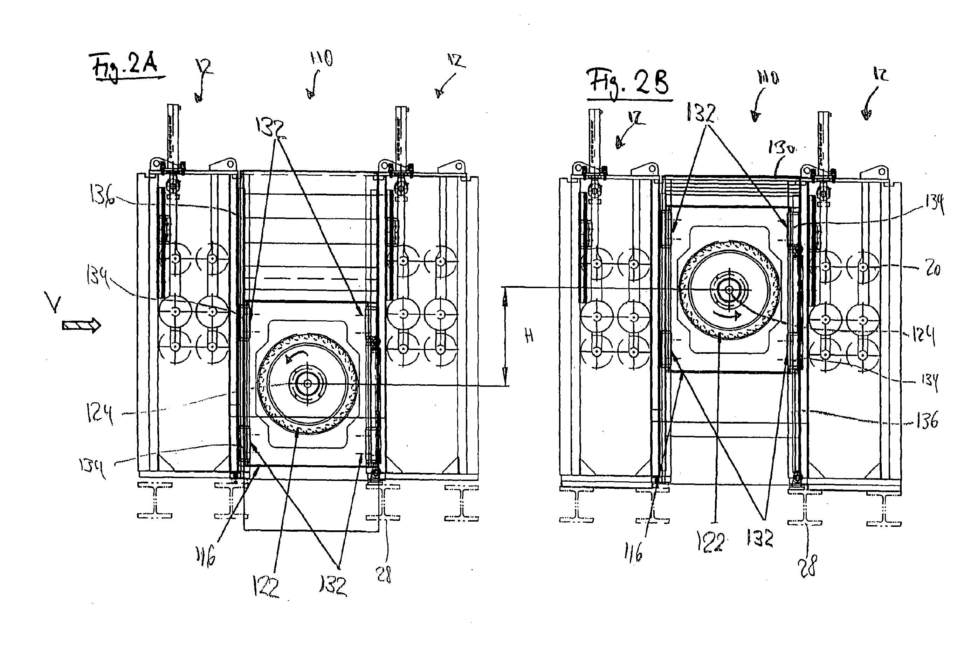

Fig. 2A und 2B zeigen eine weitere Ausführungsform der erfindungsgemäßen Sägemaschineneinheit in Form einer Sägeeinheit 110, die im Unterschied zu der in Fig. 1A und 1 B gezeigten Sägeeinheit 10 nicht nur an der ihr nachfolgenden Auszugsvorrichtung 12, sondern darüber hinaus auch an der ihr in Vorschubrichtung V des Sägeguts vorangehenden Funktionseinheit, in diesem Fall einer weiteren Auszugsvorrichtung 12 durch je eine Linearführungsvorrichtung 132 beweglich geführt ist. Die übrigen Bauteile sowie die Konstruktion der Sägeeinheit 110 entspricht derjenigen der Sägeeinheit 10, so dass im Folgenden auf eine detaillierte Beschreibung dieser gleichen Bauteile verzichtet wird und stattdessen auf die entsprechende Beschreibung dieser Bauteile bezüglich Fig. 1A und 1 B verwiesen wird. Außerdem sei darauf hingewiesen, dass bei der in Fig. 2A und 2B gezeigten Ausführungsform Bauteile der Sägeeinheit 110, welche Bauteilen der Sägeeinheit 10 entsprechen, jeweils mit gleichen Bezugszeichen, vermehrt um 100 bezeichnet sind.

Die Sägeeinheit 110 ist sowohl an der in Vorschubbrichtung V vorangehend angeordneten Auszugsvorrichtung 12 (die beispielsweise die Auszugsvorrichtung einer nicht gezeigten vorangehenden weiteren Sägemaschineneinheit sein kann) und an der nachfolgend angeordneten Auszugsvorrichtung 12 brückenartig aufgehängt und in Vertikalrichtung nach oben und unten beliebig verstellbar geführt. Diese Aufhängung sowohl an ihrer in Vorschubrichtung V vorderen als auch hinteren Seite gestattet eine weitgehend ausgeglichene Auflage der Schlitten 134 an der jeweiligen Längsführungsschiene 136, die an den Auszugsvorrichtungen 12 jeweils auf deren hinteren bzw. vorderen Seite angebracht sind. Die längs der Führungschienen 136 verfahrbaren Schlitten 134 sind am Maschinengestell 116 angebracht. In der gezeigten Ausführungsform sind die Führungsschienen 136 als Stangen ausgebildet und die Schlittenelemente 134 besitzen diese Stangen umgreifende Ansätze. Das Maschinengestell 116 besitzt hierbei jeweils zwei in Längsrichtung der Führungsschiene 136 mit ausreichend Abstand hintereinander angeordnete Schlittenelemente, um ein Verkanten vermeiden.

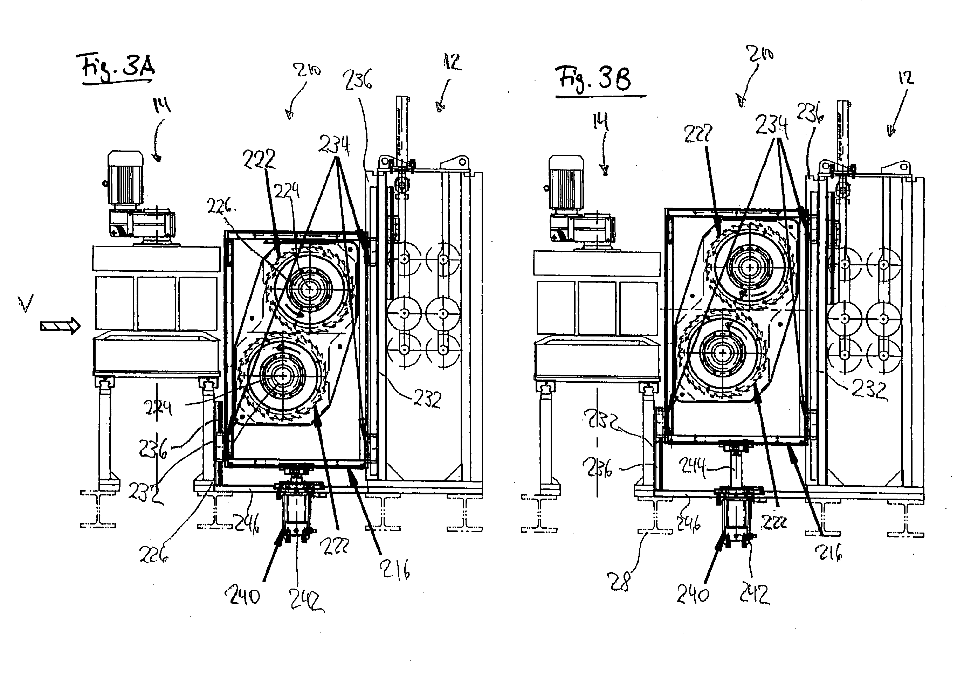

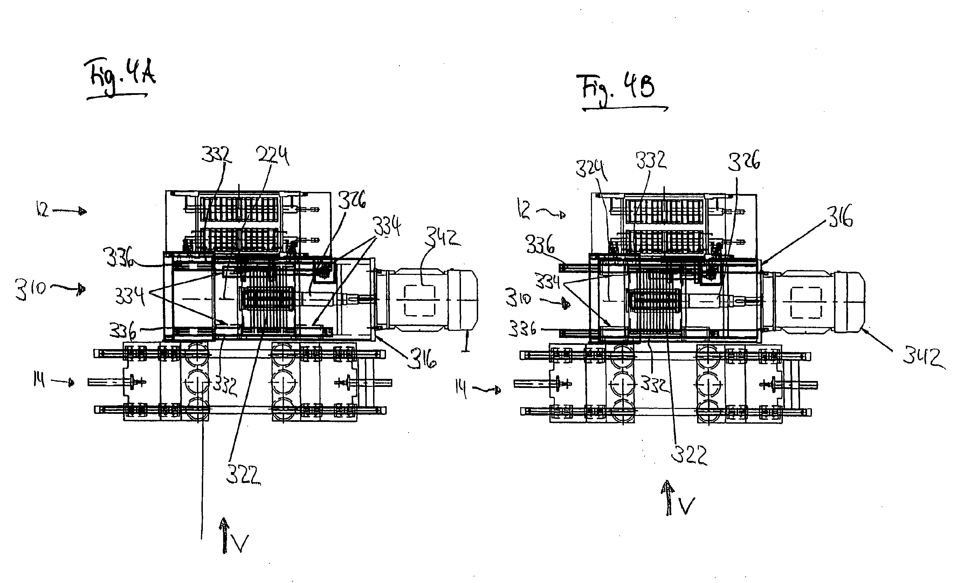

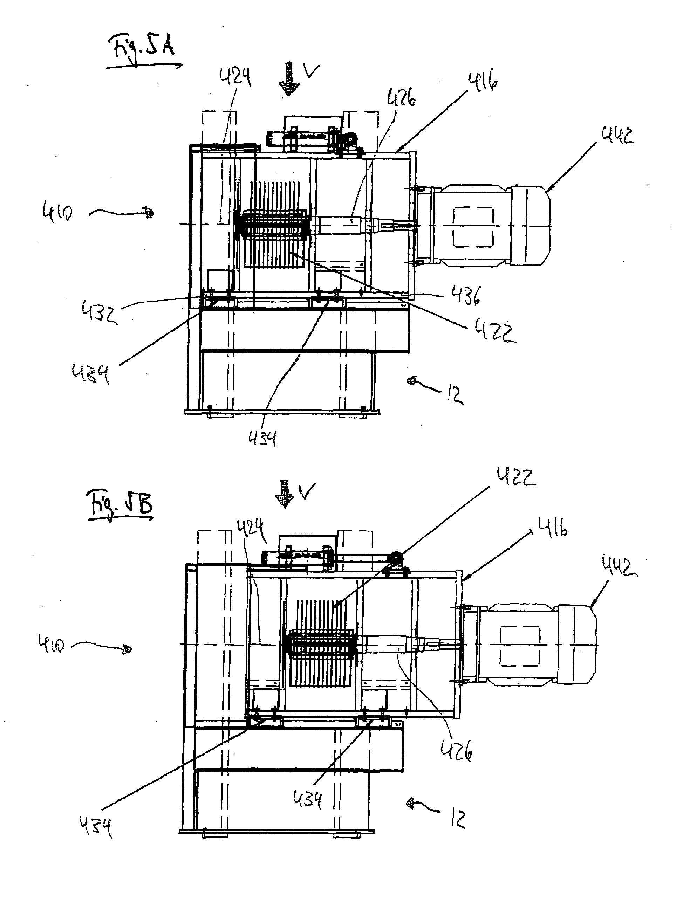

Fig. 3A und 3B zeigen in einer Seitenansicht entsprechend Fig. 1A und 1 B eine weitere Ausführungsform einer erfindungsgemäßen Sägemaschineneinheit in Form einer weiteren Sägeeinheit 210. Die in Fig. 3A und 3B gezeigte Sägeeinheit 210 entspricht in weiten Teilen der in Fig. 1A und 1 B gezeigten Sägeeinheit 10, so dass jeweils gleiche Elemente mit den selben Bezugszeichen wie in Fig. 1A und 1B bezeichnet sind, jedoch vermehrt um 200. Im Folgenden werden lediglich solche Elemente der in Fig. 3A und 3B gezeigten Ausführungsform näher erläutert, die gegenüber den vorangehenden Ausführungsformen unterschiedlich sind. Hinsichtlich der übrigen Elemente wird auf die Beschreibung der vorangehenden Ausführungsformen verweisen.

Die Sägeeinheit 210 ist als doppelwellige Säge mit zwei vertikal übereinander angeordneten Sägeanordnungen ausgebildet. Jede Sägeanordnung umfasst eine horizontal und im Wesentlichen orthogonal zur Vorschubrichtung V verlaufende Sägewelle 226, die längs einer jeweiligen Sägeachse 224 verläuft. An jeder Sägewelle 226 ist ein jeweiliges Kreissägenblatt 222 angebracht. Die Kreissägenblätter 222, sind in Querrichtung zur Vorschubrichtung V gesehen in etwa auf gleicher Höhe angeordnet und bringen in das Sägegut jeweils von der unteren bzw. der oberen Seite des Sägeguts her eindringend eine gemeinsame Schnittfläche ein. Die beiden Sägewellen 226 sind hierbei beide im Gegenuhrzeigersinn angetrieben, so dass das untere Kreissägenblatt 226 im Gegenlauf mit dem durch die Sägeeinheit 210 transportierten Sägegut arbeitet und das obere Kreissägenblatt 226 im Gleichlauf mit dem durch die Sägeeinheit 210 transportierten Sägegut arbeitet. Jeder der beiden Sägewellen 226 ist ein in Fig. 3A und 3B nicht gezeigter Antriebsmotor zugeordnet, der ebenfalls am Maschinenengestell 216 befestigt ist. Alternativ könnten beide Sägewellen 226 durch einen gemeinsamen Antriebsmotor angetrieben sein.

Die Führung des Maschinenengestells 116 der Sägeeinheit 210 an der Sägeeinheit nachfolgenden Auszugsvorrichtung 12 erfolgt wie bei der Ausführungsform Fig. 1A und 1 B durch eine an der in Vorschubrichtung vorderen Seite der Auszugscorrichtung 12 angebrachte Führungsschiene 236 und zwei durch diese Führungsschiene geführte Schlittenelemente 234, die jeweils in der Nähe des oberen und unteren Ende des Maschinenengestells 216 angebracht sind.

Darüber hinaus ist die Maschineneinheit 216 auch an ihrer in Vorschubrichtung vorderen Seite an der vorangehend angeordneten Einzugsvorrichtung 14 durch eine weitere Linearführungsvorrichtung 232 geführt, die in diesem Fall eine weitere an einem Rahmen der Einzugsvorrichtung 14 angebrachte Linearführungschiene 236 sowie ein durch die Linearführungsschiene 236 geführtes Schlittenelement 234 umfasst. Das Schlittenelement 234 ist in der Nähe des unteren Endes des Maschinenengestells 216 befestigt, so dass die Linearführungsschiene 236 nicht bis zur vollen Höhe der Einzugsvorrichtung 14 reichen muss, sondern bereits unterhalb der Höhe der Vorschubbahn des Sägeguts endet. Durch die drei Schlittenelemente 234 ist das Maschinengestell mit den beiden daran angebrachten Sägeanordnungen an drei Punkten geführt, die in der Seitenansicht gemäß Fig. 3A und 3B ein rechtwinkliges Dreieck zueinander bilden, so dass sich eine ausreichend stabile Lagerung ergibt, die insbesondere ein Verkanten der Schlittenelemente an der jeweiligen Schienenführung ausreichend verhindert.

Um die Lage des Maschinengestells 216 in vertikaler Richtung zu verstellen, ist bei der Sägeeinheit 210 eine Stellvorrichtung 240 vorgesehen, die aus einem Zylinderelement 242 und einem Hubkolbenelement 244 aufgebaut ist. Das Zylinderelement 242 ist an einer Bodenplatte 246 angebracht, die wiederum auf den Fußteilen 28 aufliegt. Das Kolbenelement 244 ist relativ zu dem Zylinderelement 242 nach oben verfahrbar, was besonders gut in Fig. 3B zu sehen ist, die eine Stellung des Maschinengestells 216 zeigt, in der das Hubkolbenelement 244 ausgefahren ist und das Maschinengestell 216 nach oben in seine höchste Position verstellt ist. Das Hubkolbenelement 244 liegt wiederum mit seinem oberen Ende an der Unterseite des Maschinengestells 216 an, um dieses nach oben bzw. nach unten zu verlagern.

Die Stellvorrichtung 240 kann dazu verwendet werden, die vertikale Lage des Maschinengestells 216 an die Höhe des zu bearbeitenden Sägeguts anzupassen, so dass die beiden Kreissägenblätter 222 jeweils von oben und von unten gleich tief in das Sägegut einschneiden. Die Höheneinstellung des Maschinengestells 216 kann auch derart erfolgen, dass jeweils nur das obere und untere Kreissägenblatt 222 in Eingriff mit dem Sägegut gelangt, so dass dieses entweder nur im Gleichlauf oder nur im Gegenlauf zersägt wird.

Die Stellvorrichtung 240 kann z.B. als einfaches Federelement ausgebildet sein, welches mit einer vorbestimmten Ausfahrkraft ausfährt und das Maschinengestell 216 nach oben verfährt, bis dieses durch eine in vorbestimmter Höhe vorgesehene Arretiereinrichtung (nicht gezeigt) arretiert wird, um eine vorbestimmte Vertikalstellung einzunehmen. Alternativ kann die Stellvorrichtung 240 auch als aktiv angetriebene Kolbenzylindereinheit bzw. als Spindelantrieb ausgebildet sein, welche(r) entweder von Hand oder durch einen Antriebsmotor angetrieben wird, um jeweils eine vorbestimmte Ausfahrstellung anzufahren.

Sofern die Stellvorrichtung 240 als Federelement ausgebildet ist, kann sie zusätzlich mit geeigneten Dämpfungsanordnungen versehen sein, so dass sie bei Vibrationen, die durch die Einzugsvorrichtung 14 oder/und die Auszugsvorrichtung 12 auf die Sägeeinheit 210 übertragen werden, geeignete Ausgleichsbewegungen durchführt und diese gleichzeitig dämpft, um zu verhindern, dass dieses Vibrationen auf die Sägeeinheit 210 übertragen werden.

Obwohl in der Seitenansicht gemäß Figur 1 bis 3 nur jeweils eines einziges Kreissägeblatt zu sehen ist, versteht es sich, das an der jeweiligen Sägewellen genauso gut auch eine Sägeblattanordnung aus mehreren Kreissägenblättern, die axial mit Abstand voneinander angeordnet sind, angebracht sein kann, um beispielsweise Bretter auszusägen.

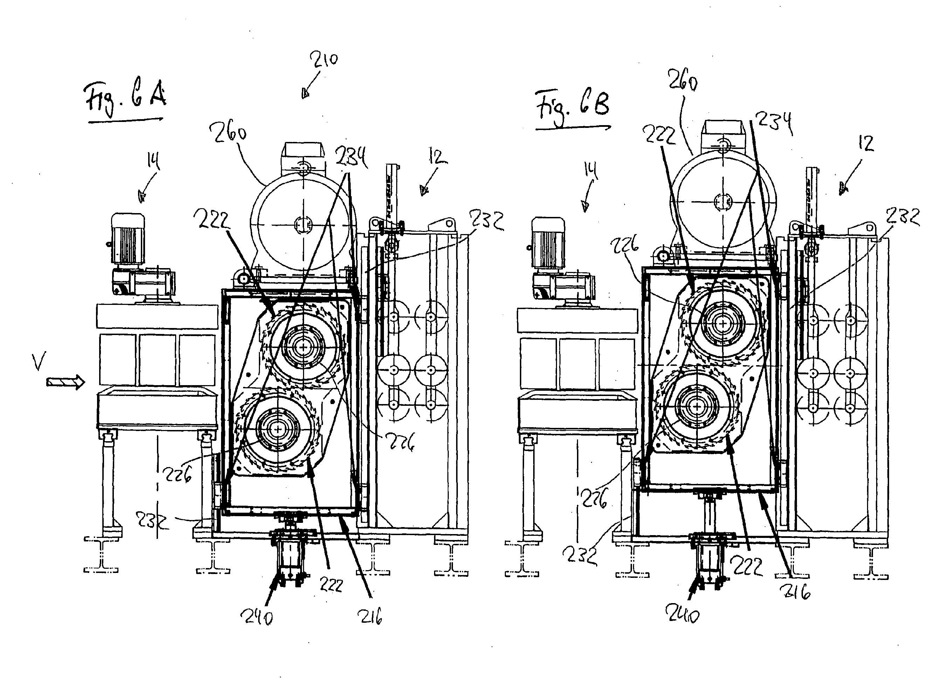

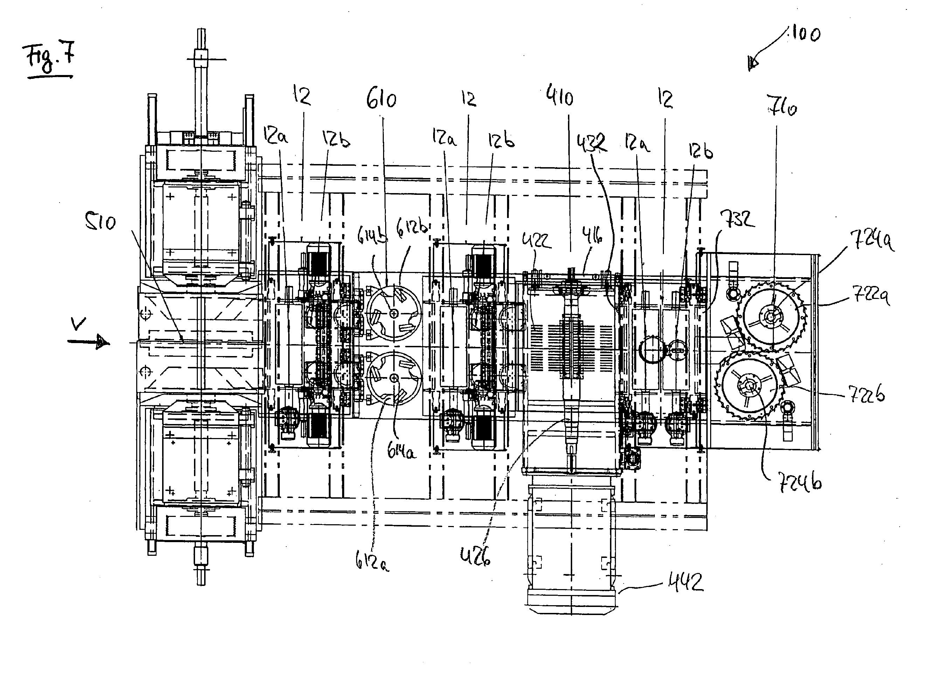

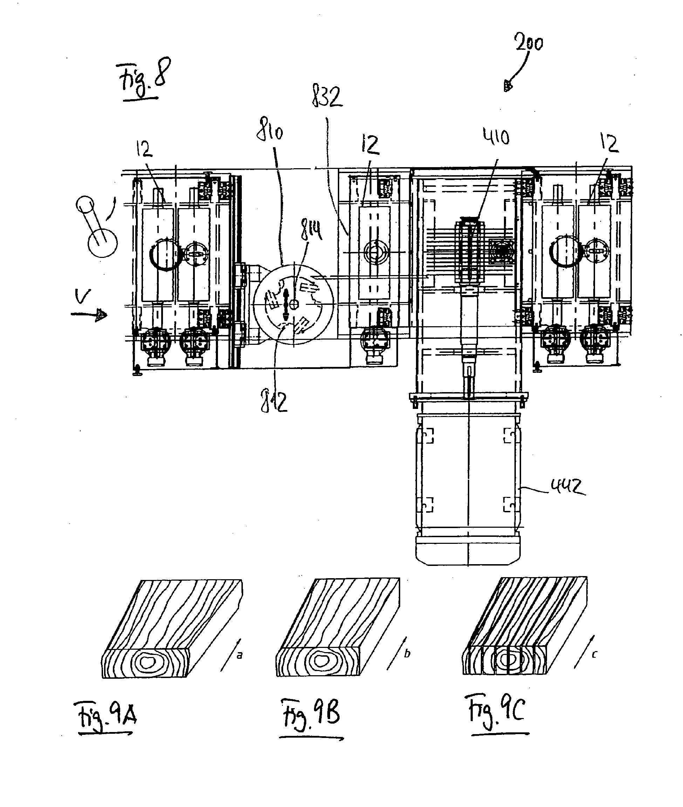

Während die in Fig. 1 bis 3 gezeigten Sägeeinheiten 210 in Vertikalrichtung, d.h. in einer Richtung orthogonal zur Vorschubrichtung V und einer Richtung orthogonal zu der bzw. den Sägeachsen der Sägeanordnung beweglich geführt war, zeigen die Fig. 4 und 5 jeweils eine Ausführungsform der Sägeeinheit, bei der das Maschinengestell in horizontaler Richtung quer zur Vorschubrichtung V verschiebbar ist, und zwar im Wesentlichen orthogonal zur Vorschubrichtung V und in Längsrichtung der Sägeachse der Sägeanordnung.

Fig. 4A und 4B zeigen hierbei jeweils eine Draufsicht auf eine vierte Ausführungsform einer erfindungsgemäßen Sägemaschineneinheit in Form einer Sägeeinheit 310, die ähnlich der in Fig. 1A und 1B gezeigten Sägeeinheit zwischen einer in Vorschubrichtung vorangehend angeordneten Einzugsvorrichtung 14 und einer nachfolgenden Auszugsvorrichtung 12 angeordnet ist. Die Sägeeinheit 310 ist ähnlich wie die in Fig. 1A und 1B gezeigte Sägeeinheit an der nachfolgenden Auszugsvorrichtung 12 durch eine Linearführungsvorrichtung 332 beweglich geführt. Im Unterschied zu der in Fig. 1A und 1 B gezeigten Linearführungseinheit umfasst die Linearführungseinheit 332 nunmehr jedoch an der Auszugseinheit 12 angebrachte Führungsschienen 336, die im Wesentlichen horizontal und quer zur Vorschubrichtung V, d.h. parallel zur Längsrichtung der Sägeachse 224, verlaufen. Am Maschinengestell 316 der Sägeeinheit 310 sind Führungsschlitten 334 angebracht, die entlang der Führungsschiene 336 geführt sind.

Das Maschinengestell 316 ist durch eine weitere Linearführungsvorrichtung 332 darüber hinaus an der ihr in Vorschubrichtung vorangehend angeordneten Einzugsvorrichtung 14 beweglich geführt. Diese Linearführungsvorrichtung 332 ist genauso aufgebaut wie die ihr gegenüber liegende Linearführungsvorrichtung 332, so dass zur Beschreibung derer Details auf deren Beschreibung verweisen werden kann. Insbesondere umfasst diese an der in Vorschubrichtung V vorderen Seite des Maschinengestells 316 angeordnete Linearführungsvorrichtung 332 ebenfalls eine an der Einzugsvorrichtung 14 angebrachte Linearführungsschiene 336, die im Wesentlichen parallel zur Sägeachse 324 verläuft, sowie zwei Schlittenelemente 234, die am Maschinengestell 316 eingebracht sind und durch die Führungsschiene 336 geführt sind.

In Fig. 4A und 4B auf der rechten Seite ist jeweils ein Antriebsmotor 242 zum Antrieb der Kreissägeblätter 322 angeordnet. Der Antriebsmotor 342 ist ebenfalls am Maschinengestell 316 befestigt. Die Ausgangswelle des Antriebsmotors 342 wird durch eine entlang der Sägeachse 324 verlaufende Sägewelle 326 verlängert, auf der eine Sägeblattanordnung 322 befestigt ist, die bei der in Fig. 4A und 4B gezeigten Ausführungsform aus einer Mehrzahl von parallel zueinander und mit jeweils gleichem Abstand zueinander angeordneten einzelnen Kreissägeblättern besteht. Diese Sägeblattanordnung bringt in das Sägegut jeweils in Vorschubrichtung verlaufende Einschnitte ein, um das Sägegut in einzelne Bretter aufzuteilen.

Die in Fig.5A und 5B gezeigte fünfte Ausführungsform einer erfindungsgemäßen Sägemaschineneinheit in Form einer Sägeeinheit ist ebenso wie die in Fig. 4A und 4B gezeigte Sägeeinheit 310 in Längsrichtung ihrer Sägeachse 424 beweglich geführt. Sie besitzt daher große Ähnlichkeit mit dieser Ausführungsform, so dass im Folgenden nur auf Unterschiede der in Fig. 5A und 5B gezeigten Ausführungsform gegenüber der in Fig. 4A und 4B gezeigten Ausführungsform eingegangen wird und zur Beschreibung der übrigen Elemente auf die Beschreibung der Ausführungsform gemäß Fig. 4A und 4B verwiesen wird, wobei erneut darauf hingewiesen wird, dass bei der in Fig. 5A und 5B gezeigten Ausführungsform gleiche oder einander entsprechende Elemente mit denselben Bezugszeichen wie der Ausführungsform gemäß Fig. 4A und 4B bezeichnet sind, jedoch gegenüber dieser vermehrt um 100.

Im Unterschied zu der Ausführungsform gemäß Fig. 4A und 4B ist die Sägeeinheit 410 gemäß Fig. 5A und 5B nur auf ihrer in Vorschubrichtung hinteren Seite durch eine Linearführungseinrichtung 432 an der ihr nachfolgenden Auszugsvorrichtung 12 in Horizontalrichtung quer zur Vorschubrichtung beweglich geführt. Die Linearführungsvorrichtung 432 ist bei der in Fig. 5A und 5B gezeigten Sägeeinheit 410 dadurch gebildet, dass am Maschinengestell 416 zwei im Abstand zueinander angeordnete Schlittenelemente 434 ausgebildet sind, die jeweils eine an der Auszugsvorrichtung 12 angebrachte Linearführungsschiene 436 umgreifen. Wie aus einem Vergleich der Fig. 5A und 5B ersichtlich ist, verfährt das Maschinengestell 416 mitsamt der daran angebrachten Sägeanordnung aus Antriebsmotor 442, Sägewelle 426 und Sägeblattanordnung 422 zwischen einer Stellung, in der die Sägeblattanordnung am linken Rand der Vorschubbahn des Sägeguts angeordnet ist (siehe Fig. 5A) und einer Stellung, an der die Sägeblattanordnung 422 am rechten Rand der Vorschubbahn V angeordnet ist (Fig. 5). Hinsichtlich der übrigen Elemente der Sägeeinheit 410 gemäß Fig. 5A und 5B wird auf die vorangehenden Ausführungsformen verwiesen.

In den Fig. 6A und 6B ist schließlich eine modifizierte Form der bereits in Fig. 3A und 3B gezeigten Ausführungsform einer erfindungsgemäßen Sägemaschineneinheit als doppelwellige Säge gezeigt. Soweit im Folgenden nicht Besonderheiten der in Fig. 6A und 6B gezeigten Modifizikation besprochen werden, wird zur Beschreibung auf die Beschreibung der Fig. 3 verwiesen und darauf hingewiesen, dass in Fig. 3A und 3B gleiche Elemente mit gleichen Bezugszeichen bezeichnet sind.

Bei der Ausführungsform gemäß Fig. 6A und 6B ist ein gemeinsamer Antriebsmotor 260 für beide Sägewellen 226 der Sägeanordnung auf der Oberseite des Maschinengestells 216 angebracht. Der Antriebsmotor 260 wird, wie ein Vergleich von Fig. 6A mit Fig. 6B zeigt, bei der vertikalen Verstellung des Maschinengestells 216 mittels der Linearführungseinrichtung 232 mitbewegt. Zum Antrieb für die Vertikalverstellung des Maschinenrahmens 216 dient die in Fig.6A und 6B zwischen dem Untergrund, auf dem die Sägemaschine steht, und dem Boden des Maschinengestells 216 wirkende Stelleinrichtung 240. Weil die beiden Linearführungseinrichtungen 232 eine genaue Führung des Maschinengestells erlauben, kann die Stellvorrichtung 240 ohne Weiteres auch große Lasten wie das Maschinengestell 216 samt den daran angebrachten zwei Sägeanordnungen und sogar samt des Antriebsmotors 260 bewegen. Die Anordnung des Antriebsmotors auf der Oberseite des Maschinengestells 216 ist besonders platzsparend und sorgt für hervorragende Platzausnutzung. Neben der bereits angesprochenen genauen Führung des Maschinengestells 216 wird diese Anordnung ermöglicht durch den insgesamt kompakten Aufbau der Sägeeinheit, der vielfältige Anbringungsmöglichkeiten für den Antriebsmotor am Maschinengestell erlaubt.

Eine weitere Besonderheit des Antriebsmotors gemäß Fig. 6A und 6B besteht darin, das er über zwei bevorzugt als Riemengetriebe ausgebildete Getriebeeinheiten verfügt, über die er beide Sägewellen 226 antreibt.

Fig. 7 zeigt in Draufsicht eine modular aufgebaute Sägemaschine (100) gemäß der Erfindung, welche eine Mehrzahl von verschiedenen Ausführungsformen von erfindungsgemäßen Sägemaschineneinheiten mit jeweils unterschiedlichen Werkzeuganordnungen umfasst. Diese Sägemaschine 100 gestattet die Bearbeitung von Sägegut, insbesondere von Rundhölzern, Profilkanthölzern, Kanthölzern und Modeln von der Rohware bis zu produktfertiger Bretterware nach Durchlauf von nacheinander geschalteten Sägemaschineneinheiten 510, 12, 610, 12, 410, 12, 710. Als Trägergestell dieser Trägermaschine dienen mehrere Auszugs/Einzugsvorrichtungen 12 mit hintereinander angeordneten vertikalen und horizontalen Zentriervorrichtungen 12a, 12b, zwischen denen jeweils unterschiedliche Sägemaschineneinheiten 410, 510, 610, 710 zur eigentlichen Bearbeitung des Sägeguts angeordnet sind. Bei der in Fig. 7 gezeigten Sägemaschine 100 handelt es sich um eine Nachschnittgruppe, in welcher das Sägegut in Vorschubrichtung V zunächst in eine Seitenbearbeitungseinheit 510 gelangt, beispielsweise eine Spaneinrichtung, welche die äußeren Rindenbereiche des Holzes abhebt und zu Spänen bzw. Hackschnitzeln verarbeitet. Das die Seitenbearbeitungseinheit 510 verlassende Sägegut wird von einer ersten Auszugseinheit 12 erfasst und in vertikaler Richtung in einer ersten Zentriereinheit 12a sowie in horizontaler Richtung in einer zweiten Zentriereinheit 12b zentriert.

Mit der Auszugseinheit 12 ist durch Linearführungen, wie sie vorangehend mit Bezug auf eine Sägeeinheit dargestellt worden sind, eine Fräseinheit 610 vertikal und horizontal beweglich gekoppelt. Die Fräseinheit 610 kann daher mit Bezug zu der ihr vorgeschalteten Auszugseinheit 12 sowohl in horizontaler Richtung orthogonal zum Sägegut als auch in vertikaler Richtung verlagert und letztendlich exakt der Vorschubbahn des Sägeguts eingestellt werden. Die Fräseinheit 610 umfasst zwei Fräsköpfe 612a, 612b mit jeweils vertikal angeordneter Fräskopfachse 614a, 614b. Das Sägegut wird zwischen den beiden Fräsköpfen hindurch transportiert. Nach Verlassen der Fräseinheit 610 gelangt das Sägegut erneut in eine Auszugseinheit 12, wo es in der bereits beschriebenen Weise in einer entsprechenden ersten Zentriereinheit 12a und einer zweiten Zentriereinheit 12b vertikal bzw. horizontal zentriert wird und zu einer nachgeschalteten weiteren Sägemaschineneinheit 410 weitertransportiert wird. Die Sägemaschineneinheit 410 entspricht der in Fig. 5A und 5B gezeigten Bauweise, d.h. mit einer in einem Maschinengestell 416 fest angebrachten Sägeanordnung aus Antriebsmotor 442, Sägewelle 426 und Sägeblattanordnung 422 und mit einer Linearführungseinrichtung 432, welche die Sägeeinheit 410 mit der ihr nachfolgenden Auszugseinheit 12 auf Längsführungsschienen 436 der Linearführungseinrichtung 432 beweglich führt. Für Details der Anordnung wird auf Fig. 5A und 5B verwiesen, wobei außerdem darauf hingewiesen sei, dass in Fig. 7 für die Sägeeinheit 410 und ihre Komponenten dieselben Bezugszeichen verwendet sind wie für entsprechende Komponenten in Fig. 5A.

Es ist selbstverständlich ohne Weiteres möglich, die in Fig. 7 gezeigt Sägeeinheit mit einwelliger Sägeanordnung durch eine zweiwellige Sägeanordnung oder eine Sägeanordnung mit noch mehr Sägewellen zu ersetzen. Je nach im Einzelnen gewünschter Funktionsweise kann eine beliebige der in den Fig. 1A, 1 B bis 6A, 6B gezeigten Sägeeinheiten vorgesehen werden.

Auf die letzte Auszugseinheit 12 folgt in Fig. 7 noch eine weitere Sägemaschineneinheit, nämlich eine Horizontalkreissägeneinheit 710 mit horizontal gelagerten Sägeblattanorndnungen 722A, 722B (deren Sägeachsen 724a, 724b folglich vertikal verlaufen). Die Horizontalkreissägeneinheit 710 ist ebenfalls durch eine an ihrer in Vorschubrichtung vorderen Seite befindliche Linearführungsvorrichtung 732 horizontal sowie vertikal beweglich mit der ihr vorgeschalteten Auszugsvorrichtung 12 gekoppelt. Die Horizontalkreissägeeinheit 110 kann daher relativ zu der Auszugseinheit 132 sowohl horizontal als auch vertikal beweglich geführt sein, wobei sie darüberhinaus von der vorgeschalteten Auszugseinheit 12 getragen wird.

Es sei noch angemerkt, dass anstelle der Horizontalkreissägeneinheit 710 auch eine Hobeleinheit mit einem oder mehreren (insbesondere zwei) Hobelvorrichtungen mit dem in Vorschubrichtung V stromabwärts liegenden Ende der Auszugseinheit 12 gekoppelt sein kann.

Durch den modularen Aufbau der Sägemaschine 100 sowie die Verwendung der Auszugsvorrichtungen 12 als Trägersystem, ist es möglich, das Gewicht der einzelnen Sägemaschineneinheiten und damit die Abmessung sowie das Gewicht der Maschine als Ganzes zu verringern. Es ist darüberhinaus ohne Weiteres möglich, einzelne Werkzeugbaugruppen bzw. Werkzeugträger seitlich aus der jeweiligen Sägemaschineneinheit auszufahren und damit einen einfachen, schnellen Werkzeugwechsel oder Wartungsarbeiten durchzuführen. Die einzelnen Module der Sägemaschine, nämlich die einzelnen Sägemaschineneinheiten, können bereits im Werk vollständig vormontiert werden und bei Endmontage schnell und einfach zu einer Sägemaschine mit individuell gewünschten Zuschnitt zusammengebaut werden. Dies verringert sowohl die zur Montage der Sägemaschine benötigte Zeit als auch den hierfür erforderlichen Montageaufwand.

Eine andere Variante einer erfindungsgemäßen Sägemaschine ist in Fig. 8 gezeigt. Bei der in Fig. 8 gezeigten Sägemaschine 200 gelangt das Sägegut beim Transport in Vorschubrichtung V zunächst in eine Auszugsvorrichtung 12, um dort horizontal und vertikal zentriert zu werden und zur nachfolgenden Fräseinheit 810 weiter transportiert zu werden. Der Fräseinheit 810 nachgeschaltet ist eine weitere Auszugseinheit 12, welche mit der Fräseinheit 810 über eine Linearführungseinrichtung 832 horizontal und vertikal beweglich gekoppelt ist. Beim Transport durch die Fräseinheit 810 wird das Sägegut mit einer (unbearbeiteten) Seite unter Druck an dem Fräskopf 812 vorbeigeführt, der um eine vertikale Achse 814 drehbar ist. Der Fräskopf 810 trennt die unbearbeitete Seite des Sägeguts (siehe b in Fig. 9D) über die ganz Höhe ab. Nach diesem Bearbeitungsschritt wird das Sägegut wieder von einer nachgeschalteten Auszugsvorrichtung 12 erfasst, vertikal ud horizontal zentriert und zu einer weiteren, nachgeschalteten Sägeeinheit 410 weiter transportiert. Die Sägeeinheit 410 entspricht der vorangehend unter Bezugnahme auf Fig. 5A, 5B und Fig. 7 erläuterten Sägeeinheit und braucht daher hier nicht im Detail erläutert zu werden. Es wird darauf hingewiesen, dass die in Fig. 8 verwendeten Bezugszeichen der Sägeeinheit 410 denjenigen für die Ausführungsform 5A, 5B entsprechen. Beim Durchtritt durch die Sägeeinheit 410 wird das Sägegut weiter zu Brettware aufgesägt. Die nach diesem Bearbeitungsschritt entstandenen Teilabschnitte (siehe c in Fig. 9C) weisen unterschiedliche Längen auf, die später auf verwertbare Längen in einer entsprechenden Ablängungs-Sägeeinheit gekappt werden.

## Patentansprüche

1. Sägemaschineneinheit (10; 12; 14; 110; 210; 310; 410; 510; 610; 710) für eine entlang einer Vorschubbahn in Vorschubrichtung (V) bewegtes Sägegut in aufeinander folgenden solcher Sägemaschineneinheiten verarbeitende Sägemaschine,
wobei die Sägemaschineneinheit (10; 12; 14; 110; 210; 310; 410; 510; 610; 710) umfasst:
ein Maschinengestell (16; 116; 216; 316; 416) und
wenigstens eine am Maschinengestell (16; 116; 216; 316; 416) in fester räumlicher Zuordnung zu demselben angebrachte Werkzeuganordnung, welche derart ausgebildet ist, dass sie an der Werkzeuganordnung in der Vorschubrichtung (V) vorbei transportiertes Sägegut bearbeitet oder/und das Sägegut in der Vorschubrichtung (V) transportiert,
**dadurch gekennzeichnet, dass**
das Maschinengestell (16; 116; 216; 316; 416) eine Führungsanordnung umfasst, durch welche es an einer in der Vorschubrichtung (V) unmittelbar vorangehend oder/und unmittelbar nachfolgend angeordneten Sägemaschineneinheit (12; 14) längs wenigstens einer quer zur Vorschubrichtung (V) verlaufenden Führungsrichtung beweglich führbar ist.

2. Sägemaschineneinheit (10; 12; 14; 110; 210; 310; 410; 510; 610; 710) nach Anspruch 1,
**dadurch gekennzeichnet, dass**
das Maschinengestell (16; 116; 216; 316; 416) an einem auf einem Untergrund ruhenden Rahmengestell aufgehängt ist.

3. Sägemaschineneinheit (10; 110; 210; 310; 410; 510; 610; 710) nach Anspruch 1 oder 2,
**dadurch gekennzeichnet, dass**
das Maschinengestell (16; 116; 216; 316; 416) an der in der Vorschubrichtung (V) unmittelbar vorangehend oder/und unmittelbar nachfolgend angeordneten Sägemaschineneinheit (12; 14) aufgehängt ist.

4. Sägemaschineneinheit (10; 12; 14; 110; 210; 310; 410; 610; 710) nach einem der Ansprüche 1 bis 3,
**dadurch gekennzeichnet, dass**
das Maschinengestell (16; 116; 216; 316; 416) an seiner in Vorschubrichtung (V) vorderen oder/und hinteren Seite eine mit der unmittelbar vorangehenden oder/und unmittelbar nachfolgenden Sägemaschineneinheit (12; 14) zusammenwirkende Linearführungsanordnung (32; 132; 232; 332; 432) aufweist.

5. Sägemaschineneinheit (10; 12; 14; 110; 210; 310; 410; 510; 610; 710) nach einem der vorangehenden Ansprüche,
**dadurch gekennzeichnet, dass**
das Maschinengestell (16; 116; 216; 316; 416) relativ zu der unmittelbar vorangehenden oder/ und unmittelbar nachfolgenden Sägemaschineneinheit (12; 14) gegenüber einer Bewegung längs der Führungsrichtung arretierbar ist.

6. Sägemaschineneinheit (10; 12; 14; 110, 210; 310; 410; 510; 610; 710) nach einem der vorangehenden Ansprüche,
**dadurch gekennzeichnet, dass**
die Führungsanordnung im Wesentlichen in einem oberen Bereich des Maschinengestells (16; 116; 216; 316; 416), insbesondere im Wesentlichen oberhalb der Werkzeuganordnung oder auf gleicher Höhe wie diese angeordnet ist.

7. Sägemaschineneinheit (10; 12; 14; 110, 210; 310; 410; 510; 610; 710) nach einem der vorangehenden Ansprüche,
**dadurch gekennzeichnet dass** ein der wenigstens einen Werkzeuganordnung zugeordneter Antriebsmotor (260; 342; 442) auf der Oberseite des Maschinengestells (16; 116; 216; 316; 416) angebracht ist.

8. Sägemaschineneinheit (210) nach einem der vorangehenden Ansprüche,
**gekennzeichnet durch**
eine mit dem Maschinengestell (216) zum Verstellen des Maschinengestells (216) längs der Führungsrichtung zusammenwirkende Stellvorrichtung (242).

9. Sägemaschineneinheit (210) nach Anspruch 8,
**dadurch gekennzeichnet, dass**
die Stellvorrichtung (240) als Linearantriebsvorrichtung ausgebildet ist.

10. Sägemaschineneinheit (210) nach Anspruch 8 oder 9,
**dadurch gekennzeichnet, dass**
die Stellvorrichtung (240) zwischen dem Maschinengestell (216) und einem Untergrund, auf dem die Sägemaschine steht, angeordnet ist.

11. Sägemaschineneinheit (210) nach einem der Ansprüche 8 bis 10,
**dadurch gekennzeichnet, dass**
die Stellvorrichtung (240) zwischen dem Maschinengestell (216) und einem relativ zu einem Untergrund, auf dem die Sägemaschine steht, festen Rahmen (246) angeordnet ist.

12. Sägemaschineneinheit (10; 12; 14; 110; 210; 310; 410; 510; 610; 710) nach einem der Ansprüche 8 bis 11,
**dadurch gekennzeichnet, dass**
das Maschinengestell (16; 116; 216; 316; 416) in Reaktion auf Bewegungen, insbesondere Vibrationen, der in Vorschubrichtung vorangehend oder/und nachfolgend angeordneten Sägemaschineneinheit (12; 14) längs der Führungsrichtung verlagerbar ist.

13. Sägemaschineneinheit (10; 110; 210; 310; 410) nach einem der vorhergehenden Ansprüche,
**dadurch gekennzeichnet, dass**
die Sägemaschineneinheit (10; 110; 210; 310; 410) als Sägeeinheit (10; 110; 210; 310; 410) mit einer am Maschinengestell (16; 116; 216; 316; 416) angebrachten Sägeanordnung mit wenigstens einem Sägeblatt (22; 122; 222; 322; 422), das um eine zugeordnete relativ zu dem Maschinengestell (16; 116; 216; 316; 416) feste Sägeachse (24; 124; 224; 324; 424) drehbar ist und von einer Seite des Sägeguts her in dieses Sägegut eingreift, ausgebildet ist.

14. Sägemaschineneinheit (10; 110; 210; 310; 410; 710) nach Anspruch 13,
**dadurch gekennzeichnet, dass**
die Sägeachse (24; 124; 224; 324; 424) quer zur Vorschubrichtung (V) verläuft.

15. Sägemaschineneinheit (10; 110; 210) nach Anspruch 13 oder 14,
**dadurch gekennzeichnet, dass**
das Maschinengestell (16; 116; 216) an der unmittelbar vorangehenden oder/und unmittelbar nachfolgenden Sägemaschineneinheit (12, 14) in einer Richtung im Wesentlichen orthogonal zur Sägeachse (24; 124; 224) verschiebbar geführt ist.

16. Sägemaschineneinheit (310; 410) nach einem der Ansprüche 13 bis 15,
**dadurch gekennzeichnet, dass**
das Maschinengestell (316; 416) an der unmittelbar vorangehenden oder/und unmittelbar nachfolgenden Sägemaschineneinheit (12; 14) im Wesentlichen in Richtung der Sägeachse (324; 424) verschiebbar geführt ist.

17. Sägemaschineneinheit (310; 410) nach einem der Ansprüche 13 bis 16,
**dadurch gekennzeichnet, dass**
auf der Sägeachse (324; 424) wenigstens zwei Sägeblattanordnungen angebracht sind, die in axialer Richtung der Sägeachse (324; 424) einen solchen Abstand zueinander aufweisen, dass durch Verlagern des Maschinenengestells (316; 416) in Richtung der Sägeachse (324; 424) abwechselnd eine der Sägeblattanordnungen in eine Sägestellung bringbar ist, in der ihre Sägeblätter (322; 422) in das Sägegut eingreifen können.

18. Sägemaschineneinheit (10; 110; 310; 410) nach einem der Ansprüche 13 bis 17,
**dadurch gekennzeichnet, dass**
die Sägeanordnung eine einzige im Wesentlichen orthogonal zur Vorschubrichtung (V) verlaufende Sägeachse (24; 124; 224; 324; 424) aufweist.

19. Sägemaschineneinheit (210; 710) nach einem der Ansprüche 13 bis 18, **dadurch gekennzeichnet, dass**
die Sägeanordnung zwei im Wesentlichen orthogonal zur Vorschubrichtung (V) verlaufende Sägeachsen (224) aufweist.

20. Sägemaschineneinheit (10; 110; 210; 310; 410) nach einem der Ansprüche 13 bis 19,
**dadurch gekennzeichnet, dass**
das wenigstens eine Sägeblatt (22; 122; 222; 322; 422) längs seiner zugeordneten Sägeachse (24; 124; 224; 324; 424) feststehend angebracht ist.

21. Sägemaschineneinheit (10; 110; 210; 310; 410) nach einem der Ansprüche 13 bis 20,
**dadurch gekennzeichnet dass** am Maschinengestell (16; 116; 216; 316; 416) ein der wenigstens einen Sägeachse (24; 124; 224; 324; 424) zugeordneter Antriebsmotor (260; 342; 442) angebracht ist.

22. Sägemaschineneinheit (210) nach Anspruch 21,
**dadurch gekennzeichnet dass**
der Antriebsmotor (260) auf der Oberseite des Maschinengestells (216) angebracht ist.

23. Sägemaschineneinheit (210) nach Anspruch 21 oder 22,
**dadurch gekennzeichnet dass**
der Antriebsmotor (260) die Sägewellen (226) von zwei Sägeanordnungen antreibt, von denen jede eine Wesentlichen orthogonal zur Vorschubrichtung (V) verlaufende Sägeachse (224) aufweist.

24. Sägemaschineneinheit (10; 110; 210; 310; 410) nach einem der Ansprüche 13 bis 23,
**dadurch gekennzeichnet, dass**
die Sägemaschineneinheit (10; 110; 210; 310; 410) als Vertikalsägeeinheit ausgebildet ist, wobei die Sägeachse horizontal verläuft.

25. Sägemaschineneinheit (710) nach einem der Ansprüche 13 bis 23,
**dadurch gekennzeichnet, dass**
die Sägemaschineneinheit (710) als Horizontalsägeeinheit ausgebildet ist, wobei die Sägeachse vertikal verläuft.

26. Sägemaschineneinheit (510) nach einem der Ansprüche 1 bis 12,
**dadurch gekennzeichnet, dass**
die Sägemaschineneinheit als Fräsaggregat (610; 810) mit einer Werkzeuganordnung, die wenigstens einen Fräskopf, vorzugsweise einen Fräskopf oder zwei Fräsköpfe in Abstand voneinander, umfasst, ausgebildet ist.

27. Sägemaschineneinheit nach einem der Ansprüche 1 bis 12,
**dadurch gekennzeichnet, dass**
die Sägemaschineneinheit als Seitenware-Abtrennaggregat ausgebildet ist.

28. Sägemaschineneinheit nach einem der Ansprüche 1 bis 12,
**dadurch gekennzeichnet, dass**
die Sägemaschineneinheit als Hobelaggregat mit wenigstens einer Hobelwelle ausgebildet ist.

29. Sägemaschineneinheit (510) nach einem der Ansprüche 1 bis 12,
**dadurch gekennzeichnet, dass**
die Sägemaschineneinheit (510) als Seitenbearbeitungseinheit ausgebildet ist.

30. Sägemaschine, umfassend wenigstens eine Sägemaschineneinheit (10; 12; 14; 110; 210; 310; 410; 510; 610; 710) nach einem der vorangehenden Ansprüche,
**dadurch gekennzeichnet, dass**
die unmittelbar nachfolgend angeordnete Sägemaschineneinheit (12) eine in Vorschubrichtung der Sägemaschineneinheit (10; 12, 14; 110; 210; 310; 410; 510; 610; 710) nachgeordnete Auszugsvorrichtung für das Sägegut ist, welche eine mit der Führungsanordnung am Maschinengestell (16; 116; 216; 316; 416) der Sägemaschineneinheit (10; 12; 14; 110; 210; 310; 410; 510; 610; 710) zusammenwirkende Führungsanordnung aufweist.

31. Sägemaschine, gewünschtenfalls nach Anspruch 30, umfassend wenigstens eine Sägemaschineneinheit (10; 12; 14; 110; 210; 310; 410; 510; 610; 710) nach einem der vorangehenden Ansprüche,
**dadurch gekennzeichnet, dass**
die vorangehend angeordnete Sägemaschineneinheit (12; 14) eine in Vorschubrichtung vor der Sägemaschineneinheit (10; 12; 14; 110; 210; 310; 410; 510; 610; 710) angeordnete Einzugsvorrichtung für das Sägegut ist, welche eine mit der Führungsanordnung am dem Maschinengestell (16; 116; 216; 316; 416) der Sägemaschineneinheit (10; 12; 14; 110; 210; 310; 410; 510; 610; 710) zusammenwirkende Führungsanordnung aufweist.
